(19) **Europäisches Patentamt**

**European Patent Office**

**Office européen des brevets**

(11) **EP 0 497 598 B1**

(12) **EUROPEAN PATENT SPECIFICATION**

(45) Date of publication and mention
of the grant of the patent:
**03.05.2000 Bulletin 2000/18**

(51) Int. Cl.[7]: **G06F 3/033**, G09G 1/14,
G06K 11/18

(21) Application number: **92300798.3**

(22) Date of filing: **30.01.1992**

(54) **An electronic graphic system**

Elektronisches graphisches System

Système graphique électronique

(84) Designated Contracting States:
**DE FR**

(30) Priority: **31.01.1991 GB 9102092**

(43) Date of publication of application:
**05.08.1992 Bulletin 1992/32**

(73) Proprietor: **QUANTEL LIMITED**
**Newbury Berkshire RG14 2LT (GB)**

(72) Inventors:
• **Kellar, Paul Roderic Noel**
**Newbury, Berkshire RG14 6QN (GB)**

• **Searby, Anthony David**
**Newbury, Berkshire (GB)**

(74) Representative:
**Milhench, Howard Leslie et al**
**R.G.C. Jenkins & Co.**
**26 Caxton Street**
**London SW1H 0RJ (GB)**

(56) References cited:
**EP-A- 0 202 747**          **EP-A- 0 403 054**
**GB-A- 2 207 587**          **US-A- 4 514 818**

EP 0 497 598 B1

**Description**

The invention relates to electronic graphic systems.

Electronic graphic or image systems in which the painting or drawing of a colour image can be simulated, or a portion of one image can be merged into another by electronic means are well known. One such graphic system is described in our British patent number 2,089,625 and corresponding US patent number 4,514,818, the teachings of which are incorporated herein by reference. This system includes a user operable input device which may be used by the user to select from a range of colours and a range of intensities and to choose from a set of notional drawing implements for use in the painting or drawing.

When a colour is chosen by the user, values representing the components of the selected colour are stored in a colour register. An implement is chosen by selecting from among different implement representations displayed on a display screen and the selected implement is defined by parameters conforming to a 3-dimensional surface representing the profile of the implement. Generally speaking the implement profile will have a high centre falling away to a lower value toward the periphery of the profile although other profiles may, of course, be defined. The implement profile represents the notional distribution of colour which would be applied by the implement to the image over the area of the image which it covers.

The user operable input device is preferably a touch tablet and stylus combination. The touch tablet is arranged to generate position signals designating the position of the stylus relative to the touch tablet when the stylus is brought into proximity. When the stylus is applied to the touch tablet a pressure signal representing the pressure applied via the stylus to the touch tablet is output from the stylus and stored in a pressure signal register. For some implements, representing say paint brushes, position signals are allowed to be generated for each movement of the stylus by the distance between picture points or similar distance, whilst for other implements, say air brushes, position signals are generated at regular time intervals, even if the stylus is held stationary on the touch tablet.

When a position signal is produced, new video signals (pixels) are derived for every picture point in the patch covered by the selected implement. An image store is provided and each new pixel is written at the appropriate picture point in the store. Such new pixels are derived by a processing circuit in accordance with the selected colour data and the distribution of the selected implement, and in response also to the pressure applied to the stylus and to the value of the pixel previously stored at the respective picture point in the store.

The user, who it is envisaged would normally be an artist lacking experience in the use of computer based systems, paints or draws by choosing a desire colour and implement and then manipulating the stylus, causing the touch tablet to generate a series of position signals which define the path or positioning of the stylus. The processing circuit reads pixels from the image store for a patch of picture points in response to each position signal and these pixels are blended by the processor with signals representing the chosen colour in proportions depending upon the respective values of the brush profile and pressure. The blend is then written back to the picture store replacing the pixels previously stored therein.

In general, the blending process is carried out a number of times for each picture point in the image store whether the implement is moving or stationary (assuming in the case of the moving implement that the patch covered by the implement is larger than the spacing between picture points). The final proportion will depend on the number of processing operations performed per pixel.

To enable the artist to observe his creation, the stored picture is read repeatedly and the pixels are applied to a TV-type colour monitor, so that the build-up of the picture can be observed. Of course such systems are not limited to TV-type formats and any suitable video format may be adopted. The system described avoids the problem of jagged edges in the image, an unpleasant stepping appearance normally associated with lines not lying horizontally or vertically in a raster display.

A similar system is described in EP-A-403054.

The above described or identified systems provide for excellent simulation of the painting or drawing of an image, and the generation of position signals at regular time intervals or at regular distances enables the simulation of the most drawing implements. However, it is sometimes desirable to provide for more realistic simulation of implements where the flow rate of paint or ink is related to the pressure applied via the implement.

The present invention aims to provide for a more realistic simulation of a wider range of implements than has hitherto been possible.

The present invention also aims to provide a stylus/touch tablet which can realistically simulate the feel of an airbrush or other propulsive implement.

The present invention also aims to provide a system able to simulate painting using an implement with a pressure sensitive flow rate.

According to one aspect of the invention an electronic graphic system comprising: storing means for storing image data; means for providing brush profile data; user manipulatable input means for providing position data, for providing pressure data relating to pressure applied thereto by a user and for repeatedly addressing positions in the stored image determined by said position data at instances of time separated from each other by respective periods of time; and processing means for combining user selected colour image data with data in the storing means at positions in the store addressed by said input means, the combining by said processing means being controlled by said brush profile data; characterised in that said user manipulatable input means comprises generating means for generating in response to pressure applied to said input means a pulse signal comprising a sequence of strobe pulses each corresponding to a respective one of said instances of time, the period of time between each pulse being dependent upon the pressure applied by the user to said input means, said pulse signal being used to initiate at each instant of time the combining by said processor of said user selected colour image data and the image data in the storing means.

According to another aspect of the invention there is provided an electronic graphic system for modifying image data representing an image in accordance with user defined data to create modified data representing a modified image, the system comprising a memory for storing image data; user operable input means for identifying areas of data in the memory; and modifying means for modifying image data in each identified area by combining the image data with data representing a user selected colour in accordance with a preselected algorithm, the input means being sensitive to pressure applied thereto and being arranged to generate a pulse signal comprising a sequence of strobe pulses at instances of time separated from each other by respective periods of time determined by the instantaneous pressure applied thereto by a user, each strobe pulse of the pulse signal being used to initiate the modifying of image data by the modifying means.

The above and further features of the invention are set forth with particularity in the appended claims and together with advantages thereof will become clearer from consideration of the following detailed description of an exemplary embodiment of the invention given with reference to the accompanying drawings.

In the drawings:

Figure 1 shows a schematic diagram of an electronic graphic system incorporating a pressure sensitive stylus;

Figure 2 illustrates the manner in which brush stamps are stamped into an image in the system shown in Figure 1; and

Figure 3 is a schematic sectional view of a stylus adapted to represent an air brush.

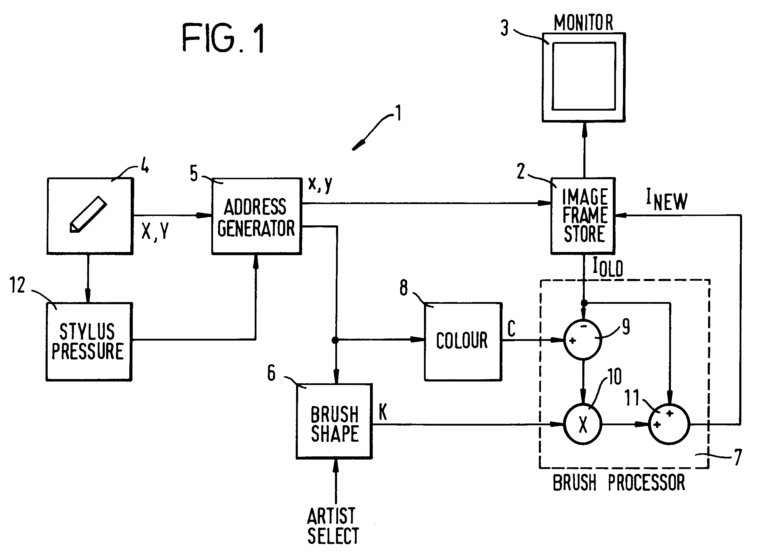

Referring now to Figure 1 of the accompanying drawings, an electronic graphic system, indicated generally at 1, comprises an image framestore 2 for storing data defining an image being painted, and a monitor 3. The contents of the image framestore are read continuously in raster sequence and the corresponding image for each raster scan is displayed on the monitor 3. The image framestore 2 also includes random access ports for random access writing and reading of data to and from the store 3 independently of the raster sequence reading of data to the monitor 3.

The system 1 also comprises a stylus/touch tablet device 4 by which the user can modify the image data in the framestore 2, and hence the image represented thereby. As the stylus is drawn across the touch tablet signals representative of the instantaneous position X,Y of the stylus are output to an address generator 5. The position information X,Y is provided at a much higher resolution to that of the image framestore 2. That is to say, the spacing between adjacent addresses in the framestore 2 is significantly larger than the spacing between adjacent positions on the touch tablet 4. It follows that for a given pixel location in the framestore 2 there are a number of corresponding positions on the touch tablet 4. For example, the spacing between adjacent positions on the touch tablet may be say eight times smaller than that between adjacent addresses in the framestore 2, and thus there will be sixty four touch tablet positions corresponding to one pixel address in memory. The address generator 5 is therefore arranged among other things to cover the instantaneous X,Y position information into a corresponding pixel address in the framestore 2. The stylus of the stylus/touch tablet device 4 also includes a pressure sensor that outputs a pressure related signal for storage as a parameter in a stylus pressure register 12.

Notional drawing implements are predefined in the system 1 and are selectable by the user from a menu of options (not shown) displayed on the monitor 3. When the artist selects a particular implement, data defining a continuous three dimensional shape covering a patch of pixels and representing the profile of the implement, as described in our above mentioned patents, is stored in a brush shape memory 6 for as long as that implement remains selected. The brush shape data may be a numerical array representing the height of individual elements forming the three dimensional shape or it may be a mathematical expression representing the profile from which expression element height data is calculated as and when required. A selection of predefined colours are also provided in the menu and the artist may select one of these predefined colours or instead may define a colour of his own choosing. Data representing the selected colour is stored in a colour register 8.

As the artist moves the stylus on the touch tablet the position data X,Y is continuously generated by the touch tablet 4 and delivered to the address generator 5. Since a selected implement will usually cover a patch of addresses in the memory, the address generator 5 is also arranged to convert the instantaneous position information X,Y from the touch tablet 4 into a patch of framestore addresses X,Y including the address in the framestore 2 corresponding to the position of the stylus. At the same time, brush shape data from the brush shape memory 6 and colour data C relating to the colour of the user selected paint from the colour register 8 are also input to the brush processor 7. The reading of the brush patch data from the brush shape memory 6 and the colour data from the colour register 8 is synchronised to the generation of individual addresses within the patch of addresses X,Y by the address generator 5 which outputs said patch addresses to the brush shape memory 6 and the colour register 8.

In the brush processor 7 image data $I_{OLD}$ is first subtracted from the colour data C by a summer 9. The sum output from the summer 9 is multiplied by the brush data K in a multiplier 10 and the product output from the multiplier 10 is then added to the image data $I_{OLD}$ by an adder 11. The resulting data $I_{NEW}$ output from the adder 11 is written back to the image framestore 10. The operation thus performed by the brush processor 7 is the interpolation of image data $I_{OLD}$ and colour data C using the brush data K as an interpolation co-efficient and can be expressed as $T_{NEW} = KC + (1-K) I_{OLD}$. As explained in our abovementioned patents, the address generator 5 is arranged to initiate by way of a pulse signal the processing step described above from time to time. In the system 1, the address generator is arranged to generate the pulse signal at time intervals governed by a predefined value. The predefined value is determined by the parameter held in the stylus pressure register 12. Thus for low pressure values pulses are generated at widely spaced time intervals, relatively speaking, and for high pressure values pulses are generated at closely spaced time intervals. The effect of this variable time between processing steps is to change the frequency at which data is read from the image framestore 2, modified by the brush processor 7 and then written back to the framestore 2. Changes in intervals between processing steps therefore affect the rate at which new brush data is stamped into the image data.

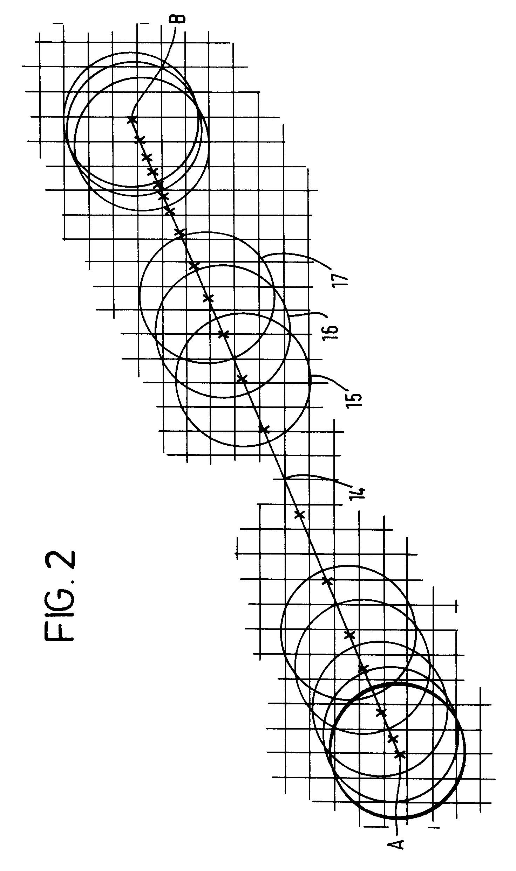

The result of this pressure related effect is illustrated in Figure 2 of the accompanying drawings. In Figure 2, a line 14 represents the path of the centre of the brush as it passes over the image and is related to a path defined by the user manipulating the stylus on the touch tablet. The line painted into the image is made up of a series of overlapping stamps, for example stamps 15, 16 and 17 in Figure 2, each stamp consisting of patch of pixels which are written into the framestore 2 by the brush processor 7 in the above described read-modify-write operation. The spacing between stamps written into the store 2 is governed by the related parameter in the stylus pressure register 12, and stylus pressure, the rate at which stamps are written into store 2 is therefore related to the pressure applied by the stylus. The centre of each brush stamp in Figure 2 is represented by a cross on the line 14.

The proportion of artist selected colour combined with the background colour in the final image will depend on the number of times a pixel is modified with new colour data. Each modified pixel will have associated with it a geometric series in K, the number of values of K in the series depending on the number of modifications made to the pixel. Individual values of K within the series depend on whether the colour contribution is being made by the centre of the brush (or another location in the brush profile having a high K value) or by the edge of the brush (or another location in the brush profile having a low K value). Generally speaking, in this mode of operation the size of the patch will be relatively large and values of K will be relatively small. The effect of having low values of K is that many stampings are required to build up the new colour in the image.

Of course, in this mode of operation the spacing of the brush stamp centres is also dependant on the speed at which the stylus is moved across the touch tablet by the user. If the stylus is moved quickly across the touch tablet the spacing will be greater and if moved slowly the centres will be closer together, and if held stationary the centres will coincide. It will be appreciated that when the stylus is held stationary over the touch tablet the rate at which new colour data is stamped into the framestore will depend solely on the pressure applied via the stylus.

The above described process of only updating image data with new brush stamps at time intervals governed by a pressure related parameter results in the stamping of new data into the image whenever pressure is applied via the stylus on the touch tablet. The system 1 thus simulates painting by an implement which applies paint whenever pressure is applied via the implement. Painting occurs regardless of whether or not there is any movement of the implement and thus the above described operation of the system is similar to the airbrush simulation disclosed in our abovementioned patents.

The system 1 can be modified so that new data is only stamped into the store image when pressure is applied via the stylus and the stylus is moved on the touch tablet. To this end, the address generator 5 can be modified to generate the strobe pulse in response to movement of the stylus on the touch tablet. After a strobe pulse has been generated small increments of high resolution X,Y movement are integrated (without reference to the sign of the movement, i.e. regardless of direction of movement) and when the value of integrated movement exceeds a value determined by the pressure related parameter a new strobe pulse is generated initiating a processing step, and the integrator is reset. In this way, the spacing between the stamping of new image data into the stored image data depends on the pressure applied via the stylus. This mode of operation is similar to the paintbrush simulation disclosed in our above mentioned patents since new colour data is only stamped into the stored image data when there is movement of the stylus on the touch tablet.

In both cases the effect of making the drawing process pressure related may be notionally regarded as making the flow rate of paint related to pressure with high flow rates for higher applied pressure and lower flow rates for lower applied pressure.

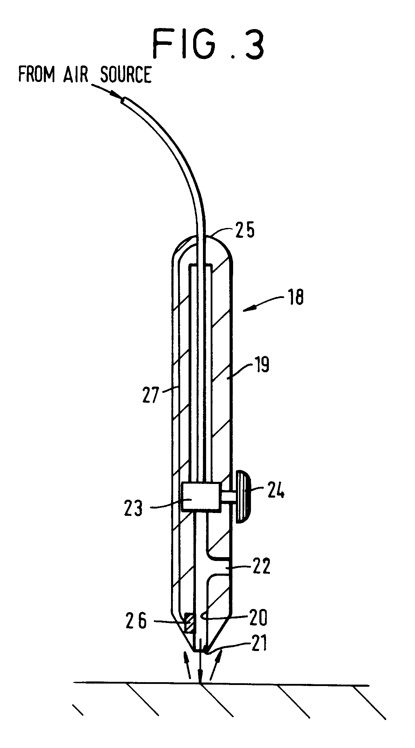

Turning now to Figure 3 of the accompanying drawings, there is shown a schematic section view of a stylus which may be used with or without the above described pressure related drawing facility. The stylus, generally indicated as 18 comprises a housing 19 forming the body of the stylus and defining an air passage 20 having an end aperture 21 and a side bore 22. The housing also contains a valve 23 operable by a thumb wheel 24 which value is connectable via an air line 25 to a source (not shown) of pressurised air. A pressure sensor 26 is mounted in the air passage 20 representing pressure at that location near the end of aperture 21 and is arranged to deliver a signal via conductor 27 to the pressure register 12 shown in Figure 1.

When using the stylus, the operator will open the valve 23 by way of the thumb wheel 24 causing air to flow along the air passage 20 and out through the end aperture 21. Normally the user would place a finger or thumb over the end of the side bore 22 to prevent air escaping via that route. Air pressure in the passage 20 will vary as air flow from the valve is changed, as the user removes his finger from or places it over the end of the bore 22, and as the end aperture 21 is moved toward and away from the touch tablet, represented by the hatched surface 28 in Figure 3. Thus, the pressure signal from the sensor 26 can be made to vary under user control and will be interpreted as required by the system. The stylus 18 thus provides for a realistic simulation of an air brush in the users hand and the image drawn by the systems in response to use manipulation of the stylus can be made to replicate painting by an air brush using techniques which are per se well known.

Having thus described the present invention by reference to a preferred embodiment it is to be well understood that the embodiment in question is exemplary only and that modifications and variations such as will occur to those possessed of appropriate knowledge and skills may be made without departure from the scope of the invention as set forth in the appended claims.

**Claims**

1. An electronic graphic system comprising:

   storing means (2) for storing image data;
   means (6) for providing brush profile data;
   user manipulatable input means (4) for providing position data, for providing pressure data relating to pressure applied thereto by a user and for repeatedly addressing positions in the stored image determined by said position data at instances of time separated from each other by respective periods of time; and
   processing means (7) for combining user selected colour image data with data in the storing means at positions in the store addressed by said input means, the combining by said processing means being controlled by said brush profile data;
   characterised in that said user manipulatable input means (4) comprises generating means (5) for generating in response to pressure applied to said input means a pulse signal comprising a sequence of strobe pulses each corresponding to a respective one of said instances of time, the period of time between each pulse being dependent upon the pressure applied by the user to said input means, said pulse signal being used to initiate at each instant of time the combining by said processor (7) of said user selected colour image data and the image data in the storing means (2).

2. An electronic graphic system as claimed in claim 1, wherein said user manipulatable input means (4) comprises a touch tablet and a stylus positionable thereon by the user, the stylus and touch tablet in combination being arranged to generate said position data identifying the position (x, y) of the stylus on the touch tablet, from which position data positions in the stored image data addressed by said input means are calculated.

3. An electronic graphic system as claimed in claim 2, wherein the user manipulatable input means (4) comprises an address generator (5) responsive to the position data for generating a patch of addresses including the said position in the store addressed by said input means.

4. An electronic graphic system as claimed in claim 3, wherein the address generator (5) further comprises a timing means responsive to the pressure data for timing the periods of time between said strobe pulses.

5. An electronic graphic system as claimed in claim 3, wherein the address generator (5) further comprises a summing means responsive to the pressure data for integrating the data representing the position of the stylus on the touch tablet to determine when the position of the stylus has changed by an amount that exceeds a predetermined value, said generating means (5) being arranged to generate said pulse signal in dependence on said position changing to exceed said predetermined value.

6. An electronic graphic system as claimed in any preceding claim, wherein said processing means (7) combines said user selected colour image data and said data in said storing means (2) in a weighted addition determined by said brush profile data to produce combined data which is written to the storing means replacing image data previously there.

7. An electronic graphic system as claimed in any preceding claim, wherein the brush profile data defines a brush profile having a centre and an edge, the profile being defined by pixels with higher values in the vicinity of said centre and pixels of lower values in the vicinity of said edge such that the colour contribution made by pixels near the centre of the profile is greater than that made by pixels near the edge.

8. An electronic graphic system for modifying image data representing an image in accordance with user defined data to create modified data representing a modified image, the system comprising a memory (2) for storing image data; user operable input means (4) for identifying areas of data in the memory; and modifying means (7) for modifying image data in each identified area by combining the image data with data representing a user selected colour in accordance with a preselected algorithm, the input means (4) being sensitive to pressure applied thereto and being arranged to generate a pulse signal comprising a sequence of strobe pulses at instances of time separated from each other by respective periods of time determined by the instantaneous pressure applied thereto by a user, each strobe pulse of the pulse signal being used to initiate the modifying of image data by the modifying means (7).

9. An electronic graphic system as claimed in claim 8, wherein each said period of time is a distance in memory between a point in one defined area and a point in a subsequently defined area corresponding to the point in said one defined area.

10. An electronic graphic system as claimed in claim 8, wherein each said period of time is a period of time between the identifying of one area in the memory (2) and the identifying of the next area in the memory (2).

11. An electronic graphic system as claimed in any of claims 8 to 10, wherein said input means (4) comprises a touch tablet and a stylus positionable on the touch tablet by a user, the stylus and touch tablet in combination being arranged to generate instantaneous co-ordinate data representing the position of the stylus on the touch tablet in response to the stylus being brought to the touch tablet and to generate pressure data as pressure is applied to said stylus.

12. An electronic graphic system as claimed in claim 11, wherein said input means (4) comprises an address generator (5) responsive to said instantaneous co-ordinate data for generating a patch of address data including address data corresponding to the instantaneous co-ordinate data thereby to identify an area in memory.

13. An electronic graphic system as claimed in any of claims 2 to 5, or 11 or 12, wherein the stylus comprises a housing (19) defining an air passage (20) connectable at one end portion to a pressurised gas source, a user operable valve means (23) for constricting the passage, and a pressure sensor (26) in the other end portion of the passage, the pressure sensor outputting a pressure related signal for said generating means.

14. An electronic graphic system as claimed in claim 13, wherein said stylus further comprises a side bore (22) for providing an open passage from said air passage through a side portion of the body, the side bore being positioned such as to facilitate closure by a user to control pressure sensed by said sensor (26).

**Patentansprüche**

1. Elektronisches Graphik-System, umfassend:

Speichermittel (2) zum Speichern von Bilddaten;
Mittel (6) zum Bereitstellen von Pinsel-Profildaten;
benutzermanipulierbare Eingabemittel (4) zum Bereitstellen von Positionsdaten, zum Bereitstellen von Druckdaten, welche in Beziehung zu dem von einem Benutzer auf diese ausgeübten Druck stehen, und zum wiederholten Ansteuern von durch die Positionsdaten bestimmten Positionen in dem gespeicherten Bild zu Zeitpunkten, welche durch jeweilige Zeitperioden voneinander getrennt sind; und Verarbeitungsmittel (7) zum Kombinieren von benutzergewählten Farbbilddaten mit Daten in den Speichermitteln an Orten in dem Speicher, welche durch die Eingabemittel angesteuert werden, wobei das Kombinieren durch die Verarbeitungsmittel durch die Pinsel-Profildaten gesteuert/geregelt ist;
**dadurch gekennzeichnet,** daß die benutzermanipulierbaren Eingabemittel (4) Erzeugungsmittel (5) zum Erzeugen eines Impulssignals in Antwort auf den auf die Eingabemittel ausgeübten Druck umfassen, welches eine Folge von Abtastimpulsen aufweist, von denen jeder einem jeweiligen Zeitpunkt entspricht, wobei die Zeitperiode zwischen jedem Impuls von dem durch den Benutzer auf die Eingabemittel ausgeübten Druck abhängig ist, wobei das Impulssignal dazu verwendet wird, an jedem Zeitpunkt das Kombinieren der benutzerausgewählten Farb-Bilddaten und der Bilddaten in den Speichermitteln (2) durch den Prozessor (7) einzuleiten.

2. Elektronisches Graphiksystem nach Anspruch 1, wobei die benutzermanipulierbaren Eingabemittel (4) ein Berührungstablett und einen von dem Benutzer auf diesem positionierbaren Stift umfassen, wobei der Stift und das Berührungstablett in Kombination derart ausgebildet sind, daß die Positionsdaten erzeugt werden, welche die Position (x, y) des Stifts auf dem Berührungstablett identifizieren, aus welchen Positionsdaten Positionen in den gespeicherten Bilddaten berechnet werden, die von den Eingabemitteln angesteuert werden.

3. Elektronisches Graphiksystem nach Anspruch 2, wobei die benutzermanipulierbaren Eingabemittel (4) einen Adressengenerator (5) umfassen, welcher auf die Positionsdaten anspricht, um einen Adressenbereich zu erzeugen, welcher den Ort in dem durch die Eingabemittel angesteuerten Speicher umfaßt.

4. Elektronisches Graphiksystem nach Anspruch 3, wobei der Adressengenerator (5) ferner ein Zeitgebermittel umfaßt, welches auf die Druckdaten anspricht, um die Zeitperioden zwischen den Abtastimpulsen zeitlich zu bestimmen.

5. Elektronisches Graphiksystem nach Anspruch 3, wobei der Adressengenerator (5) ferner ein Summationsmittel umfaßt, welches auf die Druckdaten anspricht, zum Integrieren der Daten, welche die Position des Stifts auf dem Berührungstablett repräsentieren, um zu bestimmen, wenn sich die Position des Stifts um einen Betrag geändert hat, welcher einen vorbestimmten Wert überschreitet, wobei die Generiermittel (5) derart ausgebildet sind, daß sie das Impulssignal in Abhängigkeit von der Positionsänderung erzeugen, um den vorbestimmten Wert zu überschreiten.

6. Elektronisches Graphiksystem nach einem der vorangehenden Ansprüche, wobei die Verarbeitungsmittel (7) die benutzerausgewählten Farbbilddaten und die Daten in den Speichermitteln (2) in einer gewichteten Addition kombinieren, welche durch die Pinselprofildaten bestimmt ist, um kombinierte Daten zu erzeugen, welche in die Speichermittel eingeschrieben werden, wobei die vorher vorhandenen Bilddaten ersetzt werden.

7. Elektronisches Graphiksystem nach einem der vorangehenden Ansprüche, wobei die Pinselprofildaten ein Pinselprofil mit einem Zentrum und einem Rand definieren, wobei das Profil durch Pixel mit höheren Werten in der Nähe des Zentrums und Pixel mit niedrigeren Werten in der Nähe des Randes definiert ist, so daß der von den Pixeln nahe des Zentrums erzeugte Farbbeitrag des Profils größer als der von den Pixeln nahe des Rands erzeugte ist.

8. Elektronisches Graphiksystem zum Modifizieren von ein Bild wiedergebenden Bilddaten nach Maßgabe von benutzerdefinierten Daten, um modifizierte Daten zu erzeugen, welche ein modifiziertes Bild wiedergeben, wobei das System umfaßt: einen Speicher (2) zum Speichern von Bilddaten; benutzerbetätigbare Eingabemittel (4) zum Identifizieren von Datenbereichen in dem Speicher; und Modifiziermittel (7) zum Modifizieren von Bilddaten in jedem identifizierten Bereich durch Kombinieren der Bilddaten mit eine benutzergewählte Farbe repräsentierenden Daten nach Maßgabe eines vorbestimmten Algorithmus, wobei die Eingabemittel (4) auf auf diese ausgeübten Druck empfindlich sind und derart ausgebildet sind, daß sie ein Impulssignal erzeugen, welches eine Folge von Abtastimpulsen zu Zeitpunkten aufweist, welche voneinander durch jeweilige Zeitperioden getrennt sind, die durch den von dem Benutzer gegenwärtig ausgeübten Druck bestimmt sind, wobei jeder Abtastimpuls des Impulssignals dazu verwendet wird, das Modifizieren der Bilddaten durch die Modifiziermittel (7) einzuleiten.

9. Elektronisches Graphiksystem nach Anspruch 8, wobei jede Zeitperiode eine Strecke in dem Speicher zwischen einem Punkt in einem definierten Bereich und einem Punkt in einem nachfolgend definierten Bereich ist, welcher dem Punkt in dem einen definierten Bereich entspricht.

10. Elektronisches Graphiksystem nach Anspruch 8, wobei jede Zeitperiode eine Zeitperiode zwischen dem Identifizieren eines Bereichs in dem Speicher (2) und dem Identifizieren des nächsten Bereichs in dem Speicher (2) ist.

11. Elektronisches Graphiksystem nach einem der Ansprüche 8 bis 10, wobei die Eingabemittel (4) ein Berührungstablett und einen auf dem Berührungstablett von einem Benutzer positionierbaren Stift umfassen, wobei der Stift und das Berührungstablett in Kombination derart angeordnet sind, daß diese gegenwärtige Koordinatendaten erzeugen, welche die Position des Stifts auf dem Berührungstablett in Antwort auf den auf das Berührungstablett gebrachten Stift repräsentieren, und daß diese Druckdaten erzeugen, wenn Druck auf den Stift ausgeübt wird.

**12.** Elektronisches Graphiksystem nach Anspruch 11, wobei die Eingabemittel (4) einen Adressengenerator (5) umfassen, welcher auf die gegenwärtigen Koordinatendaten zum Erzeugen eines Adreßdatenbereichs anspricht, welcher Adreßdaten umfaßt, die den gegenwärtigen Koordinatendaten entsprechen, um dadurch einen Bereich in dem Speicher zu identifizieren.

**13.** Elektronisches Graphiksystem nach einem der Ansprüche 2 bis 5 oder 11 oder 12, wobei der Stift ein Gehäuse (19) umfaßt, welches einen an einem Endabschnitt mit einer Druckgasquelle verbindbaren Luftdurchgang (20) definiert, ein benutzerbetätigbares Ventilmittel (23) zum Verengen des Durchgangs umfaßt, und einen Drucksensor (26) in dem anderen Endabschnitt des Durchgangs umfaßt, wobei der Drucksensor ein druckabhängiges Signal für das Erzeugungsmittel ausgibt.

**14.** Elektronisches Graphiksystem nach Anspruch 13, wobei der Stift ferner eine Seitenbohrung (22) umfaßt, um einen offenen Durchgang von dem Luftdurchgang durch einen Seitenbereich des Körpers bereitzustellen, wobei die Seitenbohrung derart positioniert ist, daß ein Verschließen durch einen Benutzer erleichtert ist, um den durch den Sensor (26) erfaßten Druck zu steuern.

## Revendications

**1.** Système graphique électronique comprenant :

des moyens de stockage (2) pour stocker des données d'image ;

des moyens (6) pour fournir des données de profil de pinceau ;

des moyens d'entrée pouvant être manipulés par un utilisateur (4) pour fournir des données de position, pour fournir des données de pression concernant la pression appliquée à ceux-ci par un utilisateur et pour adresser de manière répétée des positions dans l'image stockée, déterminées par lesdites données de position à des instants séparés les uns des autres par des périodes de temps respectives ; et

des moyens de traitement (7) pour associer les données d'image de couleur sélectionnées par l'utilisateur à des données situées dans les moyens de stockage dans des positions de la mémoire adressées par lesdits moyens d'entrée, l'association par lesdits moyens de traitement étant commandée par lesdites données de profil de pinceau ;

caractérisé en ce que lesdits moyens d'entrée pouvant être manipulés par un utilisateur (4) comprennent des moyens de génération (5) pour générer, en réponse à une pression appliquée auxdits moyens d'entrée, un signal d'impulsions comprenant une séquence d'impulsions de cadencement, correspondant chacune à un instant respectif desdits instants, la période de temps entre chaque impulsion dépendant de la pression appliquée par l'utilisateur auxdits moyens d'entrée, ledit signal d'impulsions étant utilisé pour initialiser à chaque instant la combinaison par ledit processeur (7) desdites données d'image de couleur sélectionnées par l'utilisateur et des données d'image situées dans les moyens de stockage (2).

**2.** Système graphique électronique selon la revendication 1, dans lequel lesdits moyens d'entrée pouvant être manipulés par un utilisateur (4) comprennent une tablette à contact et un stylet pouvant être positionné sur celle-ci par l'utilisateur, le stylet et la tablette à contact étant agencés en combinaison pour générer lesdites données de position identifiant la position (x, y) du stylet sur la tablette à contact, à partir desquelles données de position, des positions dans les données d'image stockées adressées par lesdits moyens d'entrée sont calculées.

**3.** Système graphique électronique selon la revendication 2, dans lequel les moyens d'entrée pouvant être manipulés par l'utilisateur (4) comprennent un générateur d'adresses (5) répondant aux données de position pour générer une pièce d'adresses comportant ladite position dans la mémoire adressée par lesdits moyens d'entrée.

**4.** Système graphique électronique selon la revendication 3, dans lequel le générateur d'adresses (5) comprend en outre, des moyens de séquencement répondant aux données de pression pour séquencer les périodes de temps entre lesdites impulsions de cadencement.

**5.** Système graphique électronique selon la revendication 3, dans lequel le générateur d'adresses (5) comprend en outre des moyens de sommation répondant aux données de pression pour intégrer les donnés représentant la position du stylet sur la tablette à contact pour déterminer le moment où la position du stylet a varié d'une quantité qui dépasse une valeur prédéterminée, lesdits moyens de génération (5) étant agencés pour générer ledit signal d'impulsions en dépendance de ladite variation de position pour dépasser ladite valeur prédéterminée.

**6.** Système graphique électronique selon l'une quelconque des revendications précédentes, dans lequel lesdits moyens de traitement (7) associent lesdites données d'image de couleur sélectionnées et lesdites données dans lesdits moyens de stockage (2) dans une addition pondérée déterminée par lesdites données de profil de pinceau pour produire des données combinées qui sont écrites dans les moyens de stockage remplaçant les données d'image qui s'y trouvaient précédemment.

7. Système graphique électronique selon l'une quelconque des revendications précédentes, dans lequel les données de profil de pinceau définissent un profil de pinceau ayant un centre et un bord, le profil étant défini par des pixels avec des valeurs supérieures au voisinage dudit centre et des pixels de valeurs inférieures au voisinage dudit bord, de façon que la contribution de couleur apportée par les pixels proches du centre du profil soit plus grande que celle apportée par les pixels proches du bord.

8. Système graphique électronique pour modifier des données d'image représentant une image en fonction de données définies par un utilisateur, pour créer des données modifiées représentant une image modifiée, le système comprenant une mémoire (2) pour stocker des données d'image ; des moyens d'entrée pouvant être actionnés par l'utilisateur (4) pour identifier des zones de données dans la mémoire ; et des moyens de modification (7) pour modifier les données d'image dans chaque zone identifiée en associant les données d'image à des données représentant une couleur sélectionnée par l'utilisateur en fonction d'un algorithme sélectionné à l'avance, les moyens d'entrée (4) étant sensibles à la pression appliquée à ceux-ci et étant agencés de manière à générer un signal d'impulsions comprenant une séquence d'impulsions de cadencement à des instants séparés les uns des autres par des périodes de temps respectives déterminées par la pression instantanée appliquée à ceux-ci par un utilisateur, chaque impulsion de cadencement du signal d'impulsions étant utilisée pour initialiser la modification des données d'image par les moyens de modification (7).

9. Système graphique électronique selon la revendication 8, dans lequel chaque dite période de temps est une distance en mémoire entre un point dans une zone définie et un point dans une zone subséquemment définie correspondant au point dans ladite première zone définie.

10. Système graphique électronique selon la revendication 8, dans lequel chaque dite période de temps est une période de temps entre l'identification d'une zone dans la mémoire (2) et l'identification de la zone suivante dans la mémoire (2).

11. Système graphique électronique selon l'une quelconque des revendications 8 à 10, dans lequel lesdits moyens d'entrée (4) comprennent une tablette à contact et un stylet pouvant être positionné sur la tablette à contact par un utilisateur, le stylet et la tablette à contact en combinaison étant agencés pour générer des données de coordonnées instantanées représentant la position du stylet sur la tablette à contact en réponse à l'amenée du stylet sur la tablette à contact et pour générer des données de pression à mesure qu'une pression est appliquée audit stylet.

12. Système graphique électronique selon la revendication 11, dans lequel lesdits moyens d'entrée (4) comprennent un générateur d'adresses (5) répondant auxdites données de coordonnées instantanées pour générer une pièce de données d'adresses comportant des données d'adresses correspondant aux données de coordonnées instantanées de manière à identifier une zone dans la mémoire.

13. Système graphique électronique selon l'une quelconque des revendications 2 à 5 ou 11 ou 12, dans lequel le stylet comprend un boîtier (19) définissant un passage d'air (20) pouvant être raccordé à une portion d'extrémité à une source de gaz sous pression, des moyens formant valve pouvant être actionnés par l'utilisateur (23) pour rétrécir le passage et un détecteur de pression (26) dans l'autre portion d'extrémité du passage, le détecteur de pression délivrant en sortie un signal lié à la pression pour lesdits moyens générateurs.

14. Système graphique électronique selon la revendication 13, dans lequel ledit stylet comprend en outre un alésage latéral (22) pour fournir un passage ouvert depuis ledit passage d'air à travers une portion latérale du corps, l'alésage latéral étant positionné de façon à faciliter la fermeture par un utilisateur pour commander la pression détectée par ledit détecteur (26).

# FIG.1

EP 0 497 598 B1

FIG. 2

# FIG .3

FROM AIR SOURCE